Europäisches Patentamt

European Patent Office

Office européen des brevets

(11) Publication number: **0 051 901**
**B1**

# (12) EUROPEAN PATENT SPECIFICATION

(45) Date of publication of patent specification: **12.09.84**

(21) Application number: **81201249.0**

(22) Date of filing: **05.11.81**

(51) Int. Cl.³: **B 23 P 15/00**

(54) **A method of making shell segments for expansion bolts, apparatus for carrying out the method and expansion bolt comprising shell segments made by the method.**

(30) Priority: **07.11.80 NL 8006119**

(43) Date of publication of application:
**19.05.82 Bulletin 82/20**

(45) Publication of the grant of the patent:
**12.09.84 Bulletin 84/37**

(84) Designated Contracting States:
**DE FR GB IT NL**

(56) References cited:
**DE-A-2 029 896**
**DE-C- 458 563**
**DE-C- 471 505**
**US-A-1 407 782**
**US-A-1 470 423**
**US-A-1 922 814**

(73) Proprietor: **Verenigde Bedrijven van Thiel (Van Thiel United) B.V.**
**Bosscheweg 34**
**NL-5741 SX Beek en Donk (NL)**

(72) Inventor: **Vermeulen, Johannes Wilhelmus Ignatius**
**Kleine Overbrug 6**
**NL-5707 LE Helmond (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

## Description

This invention relates to a method of making shell segments for expansion bolts, which have a generally channel-shaped cross-sectional configuration with an interior ramp adjacent one end thereof for the wedge-shaped expansion element of the device.

Expansion bolts generally consist of a central bolt with an expansion element in the form of a widened head or a screwed-on nut at one end, and an operating member at the other end, referred to herein as the head end, by means of which operating member, by rotation of the bolt, the head or the nut can be drawn towards the operating end. The bolt is surrounded by a plurality of segments of a shell which, in the non-expanded condition form a substantially closed cylinder around the bolt. The assembly can be placed in a pre-drilled hole, and by rotation of the bolt the expansion element can be moved, whereby the shell segments are expanded swivelling about an end located in the vicinity of the operating member of the bolt, and the expansion bolt becomes wedged in the hole. The expansion element may have a wedge-shaped configuration, and during the initial expansion of the shell segments cooperate with an inclined surface formed on the inside of these segments.

The shell segments of most of the prior expansion bolts have hitherto been made by casting in lost sand moulds, whereafter they are made malleable by annealing for a long time, that is to say, the segments, which after casting are still brittle, are given the required tenacity to avoid breakage from local loads exerted during the expansion. Nevertheless, especially if the expansion element is made of a hard material, fracture regularly occurs in the segments. On account of the coarse tolerances, and the fact that the known expansion bolt shell segments are often not straight, the use of expansion bolts equipped with such segments not infrequently entails difficulties in that they do not properly fit pre-drilled holes, and in the case of crooked segments, the range of expansion is limited, and the ratio of plug diameter/hole diameter is relatively small. Furthermore, the result of major dimensional differences of the shell segments is that prior expansion bolts cannot be assembled automatically.

In addition to the casting process, shell segments for expansion bolts can be made by pressing from wire or rod-shaped material. A disadvantage of this is a very high power consumption, and relatively large amounts of waste material.

Both prior techniques have the drawback of being relatively expensive.

All of the drawbacks mentioned hereinbefore are avoided when, in accordance with the present invention, for the manufacture of case segments for expansion bolts, as defined in the opening paragraph of this specification, a continuous metal strip having substantially the width and channel-shaped cross-sectional configuration of the shell segments to be made is subjected to shaping operations, comprising first removing material to produce an intermediate product having at least locally smaller transverse dimensions than that of the contemplated end product, taking account, as regards both the location thereof and the amount of material removed, of the degree of cold deformation required for the at least local increase in material strength, bringing the resulting intermediate product into the final form by cold deformation, and separating thus completed shell segments from the strip.

The method according to the invention ensures accurate dimensioning, minimal waste and lends itself to fabricating the segments of stainless steel, while, as compared with prior methods of manufacture for such segments, a saving in cost of 50% has proved possible in practice.

Moreover, in the method according to the invention, use is made of the circumstance that the cold deformation of metal results in an increase in strength. Indeed, within the framework of the present invention, the cold deformation not only serves for shaping purposes, but also for strengthening the locations of the shell segments where, in use of the expansion bolt, the expected load is greatest.

In particular, in this manner, material reinforcements can be realized at the friction-increasing mouldings provided on the outside of the segments, and at the ramp for the expansion element.

For the manufacture of a shell segment having annular grooves in its outer circumference, designed to receive annular members for keeping the shell segments together around the bolt, according to a preferred feature of the present invention, notches are punched from the edges in the annular groove zones, said notches being of such depth that the width of the remaining web portion between the notches is less than the relevant dimension of the end product, and during the cold deformation of the annular grooves, the width of the web portion can be adjusted to the required size.

In the case of expansion bolts equipped with an expansion element formed as a nut screwed on the bolt, rather than an expansion head fixedly secured to the bolt, the shell segments may be provided with a restricted neck portion which adjacent to the ram connects the web of the shell segments with an inwardly projecting terminal edge to retain and surround the expansion element. According to the invention for the manufacture of such shell segments, so much material can be removed laterally from said neck zone that during the subsequent cold deformation by displacement of material both from the neck zone proper and from the ramp zone, the transverse end dimension is reached in both zones. The ramp zone, which forms a heavily loaded location of the shell segments, is thus additionally reinforced.

For the performance of the method the present invention provides a follow die device comprising feeding means for feeding strip-shaped material, die means and cutting means for severing end products from the strip, said die means comprising dies for locally removing material from the strip, as disclosed in DE—A—2,029,896, which device being characterized by a die for forming a shoulder in the strip by partial shearing action, and by a stop surface facing in the downstream direction for the shoulder formed, said stop surface being situated downstream of said shearing die and upstream of a forming die and said cutting means, wherein the various follow die members are controlled in such a manner that after the strip has been placed in position with a shoulder in contact with the stop surface, first a shell segment previously brought into its final form is severed from the strip, and only then a next intermediate product is brought into its final form by cold deformation. In case during the final forming operation an elongation of the intermediate product is brought about, the shoulder prevents such elongation from being transmitted in the upstream direction, which would interfere with the uniformity of the material supply, and the shoulder also serves as a reference for the function of the cutting means.

There are a number of advantages in first cutting off the strip of material and only then carrying out the cold deformation step. During the cutting-off operation the stop surface can be used as a reference, and any elongation from the cold deformation can take place in the downstream direction without interference from the cutters. Furthermore, as regards the control of the various parts of the follow die, the cutters have the longest cycle, and with the sequence of operation according to the invention the non-effective part of this cycle can be utilized for the cold deformation operation.

DE—A—2,029,896 discloses a method and a machine for manufacturing expansion bolts wherein use is made of a follow die device comprising a banding station. The known method differs from the one according to the present invention in that the final product is not a separate expansion bolt shell segment, but a complete shell composed of interconnected shell segments. To this end a stock strip with a width corresponding to the length of the final shell is fed into the follow die device wherein lateral slits are punched out of the stock. The strips slits are punched out of the stock. The strips which are left between the slits and which are interconnected at the slit bottoms, are then formed into shell segments and a number of such interconnected shell segments is then separated from the stock and bent into a substantially close expansion bolt shell.

The only simularity with the present invention, which provides for feeding a generally channel-shaped narrow stock strip having a width smaller than the width of one shell segment, is the use of a follow die device including a station wherein shell segments are brought into their final form by cold deformation.

The invention also relates to shell segments made in accordance with the invention, and an expansion bolt provided with such shell segments.

One embodiment of the follow die will now be described, by way of example, for clarifying the invention, with reference to the accompanying drawings, in which

Fig. 1 is a perspective view of one embodiment of an expansion bolt;

Fig. 2 diagrammatically shows an apparatus for the manufacture of shell segments for the expansion bolt shown in Fig. 1;

Fig. 3 is side-elevational view and Fig. 4 a top plan view of a strip which has been operated upon in successive stages; and

Fig. 5 is a bottom view of a shell segment according to the arrow V in Fig. 3.

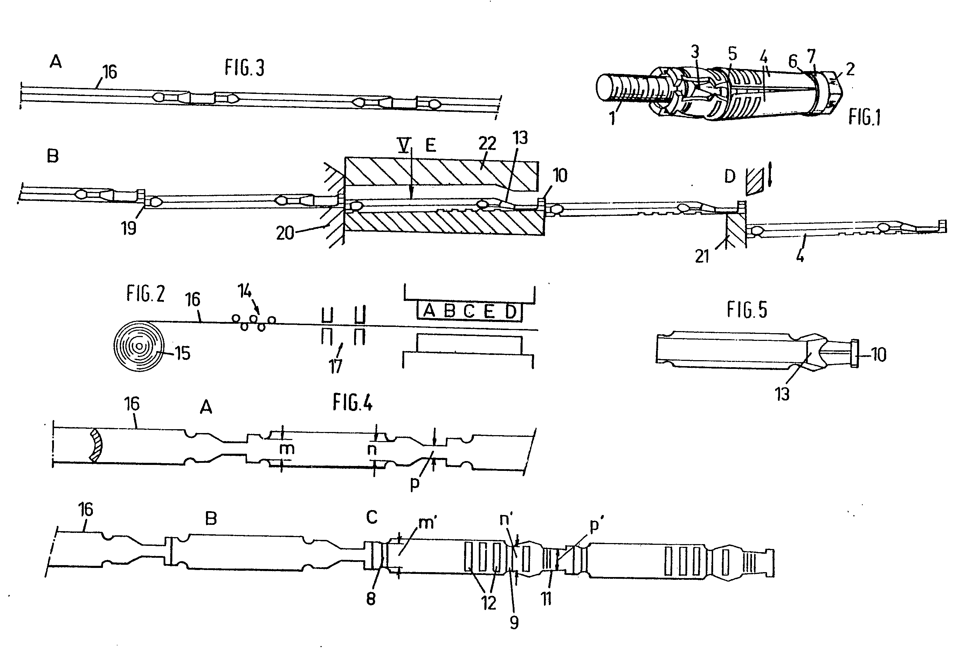

As shown in Fig. 1, an expansion bolt is composed of a bolt 1 having a head 2 with which bolt 1 can be rotated. Bolt 1 carries an expansion element 3, which in the embodiment shown is a nut, which by rotation of bolt 1 can be moved axially on bolt 1. Bolt 1 and nut 3 are embraced by a shell composed of a plurality of segments 4 which in the non-expanded condition are held together by a spring ring 5 and by a beaded edge 6 formed on a metal cap 7. After being positioned in a pre-drilled hole, bolt 1 can be rotated to move nut 3 into the direction of head 2, whereby segments 4 are expanded, tilting about the end under cap 7, and clamp down aguinst the hole wall.

Shell segments 4 for the bolt of the type shown in Fig. 1 have a channel-shaped cross-sectional configuration, which is shown on the left in Fig. 4. Each segment has on its web portion on the outside annular groove segments 8 and 9 for receiving beaded edge 6 and spring ring 5, respectively, and further an inwardly projecting terminal edge 10 connected to the web portion by a restricted neck portion 11. The convex outer surface of segments 4 is provided with a moulding 12 for increasing the friction on the wall of a drilled hole, and with a ramp 13 on the inside for nut 3. As shown in Fig. 4, in the non-expanded condition, shell segments 4 are capable of retaining and enclosing nut 3 with the terminal edges 10 and the restricted neck portions 11.

For the manufacture of such shell segments, use can be made of an apparatus broadly shown in Fig. 2, which comprises guide means 14 for channel-section strip material 16 fed from a supply 15. Disposed downstream of guide means 14 are transport means 17 for incrementally feeding strip 16 to a follow die device 18, in which the successive operating stations are designated by A, B, C, E and D. By the same characters, the operations on strip 16 are designated in Figs. 3 and 4. These operations are:

A. forming intermediate products by removing material from the side edges of the strip 16 in the zones where later the annular groove segments 8 and 9 and neck 11 are formed;

B. partially shearing strip 16 for forming a shoulder 19 therein;

C. positioning strip 16 with shoulder 19 behind a stop 20;

D. separating a completed shell segment 4 from the end of the strip by means of cutters 21;

E. making an end product by cold deformation in a press 22 of the intermediate product present right behind the stop (end of cycle).

Phase D (separation) is carried out before the performance of the cold-deformation step, so that the path of movement of the strip in the vicinity of the cutters is cleared, and any elongation of material which may occur during the cold-deformation step can take place unimpeded, and the overall length of the follow die device 18 can be minimized.

In phase A, more material can be removed than would be strictly necessary for final dimensioning. Thus, for example, in phase A, measurements m, n and p may be less than the corresponding final measurements $m^1$, $n^1$ and $p^1$ in phase E. Final measurements $m^1$, $n^1$ and $p^1$ are then realized during the cold-deformation phase by displacement of material, which results in a local increase in strength. In particular, measurement $p^1$ of neck portion 11 can be realized by displacing material both from neck portion 11 proper, and from the zone of ramp 13, whereby this is additionally reinforced, which is beneficial by reason of the fact that during the initial phases of the expansion this zone is very heavily loaded.

### Claims

1. A method of making shell segments for expansion bolts, which segments have a generally channel-shaped cross-sectional configuration with an interior ramp adjacent one end thereof for cooperation with a wedge-shaped expansion element of the expansion bolt, characterized in that a continuous metal strip having substantially the width and channel-shaped cross-sectional configuration of the shell segments to be made is subjected to shaping operations, comprising first removing material to produce an intermediate product having at least locally smaller transverse dimensions than that of the contemplated end product, taking account, as regards both the location thereof and the amount of material removed, of the degree of cold deformation required for the at least local increase in material strength, bringing the resulting intermediate product into the final form by cold deformation and separating thus completed shell segments from the strip.

2. A method according to claim 1, for the manufacture of a shell segment having annular grooves in its outer circumference, characterized in that notches are punched from the edges in the annular groove zones, said notches being of such depth that the width of the remaining web portion between the notches is less than the relevant dimension of the end product, and during the cold deformation of the annular grooves, the width of the web portion is adjusted to the required size.

3. A method according to claim 2 for making a shell segment with a restricted neck portion which adjacent to the ramp connects the web of the shell segment with an inwardly projecting terminal edge to surround and retain the expansion element, characterized in that so much material is removed laterally from said neck zone that during the subsequent cold deformation by displacement of material both from the neck zone proper and from the ramp zone, the transverse end dimension is reached in both zones.

4. A follow die device for carrying out the method according to any one of the preceding claims, comprising feeding means for feeding strip-shaped material, forming die means and cutting means for severing end products from the strip, said die means comprising dies for locally removing material from the strip, characterized by a die for forming a shoulder in the strip by partial shearing action, there being provided a stop surface facing in the downstream direction for the shoulder formed, said stop surface being situated downstream of said shearing die and upstream of the forming die and said cutting means, wherein the various follow die members are controlled in such a manner that after the strip has been placed in position with a shoulder in contact with the stop surface, first a shell segment previously brought into its final form is severed from the strip, and only then a next intermediate segment-product is brought into its final form by cold deformation.

5. An expansion bolt shell segment made by the method according to any one of claims 1—3.

6. An expansion bolt comprising shell segments according to claim 5.

### Revendications

1. Méthode pour fabriquer des segments de coquille pour boulon à coquille d'expansion, lesdits segments ayant, en coupe, la forme générale d'une goutière avec une rampe intérieure adjacente à une de leurs extrémités et destinée à coopérer avec un élément d'expansion, en forme de coin, dudit boulon à coquille d'expansion, caractérisée en ce qu'une bande métallique continue ayant sensiblement la largeur et, en coup, la forme générale de

gouttiére des segments de coquille à fabriquer est soumise à des opérations de mise en forme consistant dans un premier temps à prélever de la matière pour obtenir un product inter-mèdiaire ayant, au moins localement, des dimensions transversales inférieures à celles de product final envisagè, compte étant tenu, quant à l'emplacement du prélèvement et à la quantité de matière prélevée, du degré de déformation à froid nécessaire pour accroître, au moins localement, la résistance mécanique du matériau, à amener le produit intermédiaire ainsi obtenu à sa forme définitive par déformation à froid, et à séparer de la bande les segments ainsi terminés.

2. Méthode selon la revendication 1, pour la fabrication d'un segment de coquille ayant des gorges annulaires sur son pourtour extérieur, caractérisée en ce que des encoches sont estampées aux dépens des bords dans les zones des gorges annulaires, lesdites encóches étant d'une profondeur telle que la largeur de la portion de l'âme subsistant entre les encoches est inférieure à la dimension correspondante du produit final et en ce qu'au cours de la déformation à froid donnant les gorges annulaires, la largeur de cette région de l'âme est réglée à la dimension voulue.

3. Méthode selon la revendication 2 pour fabriquer un segment de coquille ayant une région rétreinte, formant col, qui au voisinage la rampe relie l'âme des segments de coquille à un rebord terminal tourné vers l'intérieur à l'effet de retenir et d'entourer l'élément d'expansion, caractérisée en ce que l'on prélève latéralement aux dépens de ladite zone formant col assez de matière pour qu'au cours de la déformation à froid subséquente effectuée par déplacement de matière à partir, à la fois, de la région du col proprement dite et de la région de la rampe, la dimension transversale définitive est atteinte dans ces deux régions.

4. Dispositif à matrice à séquence d'oparations pour l'application de la méthode correspondant à une quelconque des revendications précédentes, comprenant des organes d'alimentation destinés à alimenter en matériau en forme de bande, des organes constitués par des matrices, servant au formage, et des organes coupeurs destinés à séparer de la bande les produits finis obtenus, lesdits organes constitués par des matrices comprenant des matrices destinées à prélever localement de la matière aux dépens de la bande, ledit dispositif étant caractérisé par une matrice destinée à former par cisaillement partiel un épaulement dans la bande, une surface de butée faisant face à l'aval étant prévue pour l'épaulement ainsi formé, ladite surface de butée étant située en aval de ladite matrice de cisaillement et en amont de la matrice de formage et desdits organes coupeurs, dispositif dans lequel les divers organes de la matrice à séquence sont commandés de telle façon qu'après que la bande a été positionnée avec un épaulement touchant la surface de butée, un élément de coquille préalablement amené à sa forme finale est d'abord séparé de la bande, et qu'après seulement un segment, à l'état de produit intermédiaire, est amené par déformation à froid à sa forme définitive.

5. Segment de coquille pour boulon à coquille d'expansion fabriqué par la méthode selon une quelconque des revendications 1 à 3.

6. Boulon à coquille d'expansion comprenant des segments de coquille selon la revendication 5.

**Patentansprüche**

1. Verfahren zur Herstellung von Spreizhülssegmenten für Spreizbolzen, welche Segmente einen im wesentlichen rinnenförmigen Querschnitt und an einem Ende eine innenliegende Rampe zum Zusammenwirken mit einem keilförmigen Spreizglied des Spreizbolzens augweisen, dadurch gekennzeichnet, daß ein endloses Metallband, das im wesentlichen die Breite und den rinnenförmigen Querschnitt der herzustellenden Spreishülssegmente aufweist, Umformungsoperationen unterworfen wird, die zunächst in dem Entfernen von Material zur Erzeugung eines Zwischenproduktes, das wenigstens örtlich kleinere Querabmessungen aufweist als das gewünschte Endprodukt, und dann im Kaltverformen des erhaltenen Zwischenproduktes zur Erzeugung der Endform und endlich dem Abtrennen des fertigen Spreizhülssegmentes von dem Metallband besteht, wobei das Entfernen des Materials sowohl bezüglich des Ortes als auch der Menge unter Berücksichtigung des Ausmaßes der Kaltverformung erfolgt, die für eine zumindest örtliche Erhöhung, der Materialfestigkeit des Spreizhülssegmentes erforderlich ist.

2. Verfahren nach Anspruch 1 zug Herstellung eines Spreizhülssegmentes, das an seiner äußeren, Umfangsfläche auf einen Kreisring liegende Nuten aufweist, dadurch gekennzeichnet, daß von den Rändern her in die Nutzone des Spreizhülssegmentes Kerben eingestanzt werden und die Kerben eine solche Tiefe haben, daß die Breite des zwischen den Kerben verbleibenden Steges geringer ist aals die relevante Dimension des Endproduktes, und daß während der Erzeugung der auf dem Kreisring liegenden Nuten durch Kaltverformung die Breite dieses Steges aur die erforderliche Große eingestellt wird.

3. Verfahren nach Anspruch 2 zur Herstellung eines Spreizhülssegmentes mit einem schmalen Halsabschnitt, der neben der Rampe den Steg des Segmentes mit einem nach innen abgewinkelten Endabschnitt verbindet, der zum Umfassen und Halten des Spreizgliedes dient, dadurch gekennzeichnet, daß von dem Halsabschnitt seitlich soviel Material entfernt wird, daß bei der nachfolgenden Kaltverformung die end-gültigen Querabmessungen in beiden Ab-schnitten durch Materialverdrängung sowohl

von dem eigentlichen Halsabschnitt als auch von dem die Rampe bildenden Abschnitt erreicht wird.

4. Folgestanzvorrichtung zur Durchführung des Verfahrens nach einem vorhergehenden Ansprüche mit einer Einrichtung zum Zuführen von bandförmigen Material, Umformeinrichtungen und einer Schneideinrichtung zum Abtrennen der Endprodukte von dem Band, wobei die Umformeinrichtungen Stanzwerkzeuge zum örtlichen Abtrennen von Material vom Band umfassen, gekennzeichnet durch ein Stanzwerkzeug zur Erzeugung einer Schulter in dem Band durch partielles Scheren, durch eine in Transportrichtung weisende Anschlagfläche für die erzeugte Schulter, welche Anschlagfläche sich in Transportrichtung hinter dem Scherwerkzeug und vor der Schneideinrichtung befindet, und durch eine solche Steuerung der verschiedenen, aufeinander folgenden Werkzeuge der Umformeinrichtung, daß, nachdem das Band in eine Lage gebracht worden ist, in der es mit seiner Schulter an dem Anschlag anliegt, zunächst ein Spreizhülssegment, das zuvor in seine endgültige Form gebracht worden ist, von dem Band abgeschnitten wird und erst dann ein nächstes Zwischenprodukt durch Kaltverformung in seine Endform gebracht wird.

5. Spreizhülssegment, hergestellt nach dem Verfahren nach einem beliebigen der Ansprüche 1 bis 3.

6. Spreizbolzen mit Spreizhülssegmenten nach Anspuch 5.

0 051 901

FIG.1
FIG.2
FIG.3
FIG.4
FIG.5